# EUROPEAN PATENT APPLICATION

(11) **EP 3 000 909 A1**
(43) Date of publication of application: **30.03.2016**
(21) Application number: 15184448.7
(22) Date of filing: 09.09.2015
(51) Int. Cl.: C23C 4/02, C23C 4/12, B05B 13/04, F01D 5/28

(54) **COATING PROCESS**

(30) Priority: 23.09.2014 US 201414493789
(71) Applicant: General Electric Company, Schenectady, NY 12345 (US)
(72) Inventor: REID, Thomas Robert, Greenville, SC South Carolina 29615 (US); WALSH, Patrick Thomas, Greenville, SC South Carolina 29615 (US); LEVY, Lawrence Matthew, Greenville, SC South Carolina 29615 (US); LAMBERT, John Christopher, Greenville, SC South Carolina 29615 (US); DEPALMA III, Michael Anthony, Greenville, SC South Carolina 29615 (US); LOMAS, Jonathan Matthew, Greenville, SC South Carolina 29615 (US)
(74) Representative: Cleary, Fidelma

(57) **Abstract**

A coating process 100 is provided. The coating process 100 includes positioning a component 101 within an enclosed coating system 103, the enclosed coating system 103 including a coating apparatus 130, applying a first coating 106 over at least a portion of the component 101, then robotically applying a mask 107 to the component 101, then applying a second coating 108 over at least the portion of the component 101. The component 101 remains within the enclosed coating system 103 throughout the process 100. Another process 100 also includes removing a first coating head portion 109 of the coating apparatus after applying the first coating 106 and replacing the first coating head portion 109 with a masking head portion 111, then removing the masking head portion 111 after robotically applying the mask 107 to the component 101 and replacing the masking head portion 111 with a second coating head portion 113.

## Description

The present invention is directed generally toward a coating process. More specifically, the present invention is directed to a coating process including applying more than one coating layer to a component within an enclosed coating system.

Turbine components are often run at high temperatures to provide maximum operating efficiency. However, the temperature at which a turbine can run may be limited by the temperature capabilities of the individual turbine components. In order to increase the temperature capabilities of turbine components, various methods have been developed. One method for increasing the temperature capabilities of a turbine component includes the incorporation of internal cooling holes, through which cool air is forced during turbine engine operation. As cooling air is fed from the cooler side of the component wall through a cooling hole outlet on the hot side, the rushing air assists in lowering the temperature of the hot metal surface. Additionally, the cool air may provide film cooling on the surface of the turbine component.

Another technique for increasing the temperature capabilities of a turbine component includes the application of coatings, such as a bond coat and a thermal barrier coating (TBC). Often, turbine components include both cooling holes and various coatings applied over the surface of the component. Typically, when coatings are applied over the surface of a component having cooling holes formed therein, the cooling holes are masked before coating. However, the application of multiple coatings may diminish the masking material, particularly when multiple application techniques are used. To decrease the diminishing of the masking material, it may be desirable to re-apply the masking material between the application of multiple coating layers.

Often, the masking material is applied manually. Due to the elevated temperatures during the application of the coatings, the component is typically cooled before an operator is able to safely remove the component from the coating fixture and manually apply the masking material. Cooling the component, removing the component from the coating fixture, manually applying the masking material, and re-fixturing the component before applying the next layer of coating increases coating time, increases coating cost, and decrease efficiency of the coating process.

A coating process with improvements would be desirable in the art.

In one embodiment, a coating process includes positioning a component within an enclosed coating system, the enclosed coating system including a coating apparatus, applying a first coating over at least a portion of the component, then robotically applying a mask to the component, then applying a second coating over at least the portion of the component. The component remains within the enclosed coating system throughout the coating process.

In another embodiment, a coating process includes positioning a component within an enclosed coating system, applying a first coating over at least a portion of the component with a coating apparatus; then removing a first coating head portion of the coating apparatus and replacing the first coating head portion with a masking head portion; then robotically applying a mask to the component with the coating apparatus; then removing the masking head portion of the coating apparatus and replacing the masking head portion with a second coating head portion; and then applying a second coating over at least a portion of the component with the coating apparatus; wherein the component remains within the enclosed coating system throughout the coating process.

In another embodiment, a coating process includes positioning a component within an enclosed coating system, high-velocity oxygen fuel coating at least a portion of the component with a coating apparatus, then removing a coating head portion of the coating apparatus and replacing the coating head portion with a masking head portion, then robotically applying a mask to the component with the coating apparatus, then removing the masking head portion of the coating apparatus and replacing the masking head portion with an air-plasma head portion, and then air-plasma spraying the component with the coating apparatus.

Various features and advantages of the present invention will be apparent from the following more detailed description of the preferred embodiments, taken in conjunction with the accompanying drawings which illustrate, by way of example, the principles of the invention. In the drawings:
FIG. 1 is a perspective view of an enclosed coating system.
FIG. 2 is a flow chart of a coating process, according to an embodiment of the disclosure.
FIG. 3 is a process view of the coating process of FIG. 2.
FIG. 4 is a flow chart of a coating process, according to an embodiment of the disclosure.
FIG. 5 is a process view of the coating process of FIG. 4.

Wherever possible, the same reference numbers will be used throughout the drawings to represent the same parts.

Provided is a coating process. Embodiments of the present disclosure, in comparison to articles and methods not using one or more of the features disclosed herein, increase masking efficiency, increase coating efficiency, decrease or eliminate cooling of a component prior to masking, provide a removable masking head, decrease total cycle time for a coating process, provide masking within a coating cell, provides automated masking, decrease coating cost, decrease labor cost, decreases or eliminates un-fixturing and re-fixturing of components during coating, or a combination thereof.

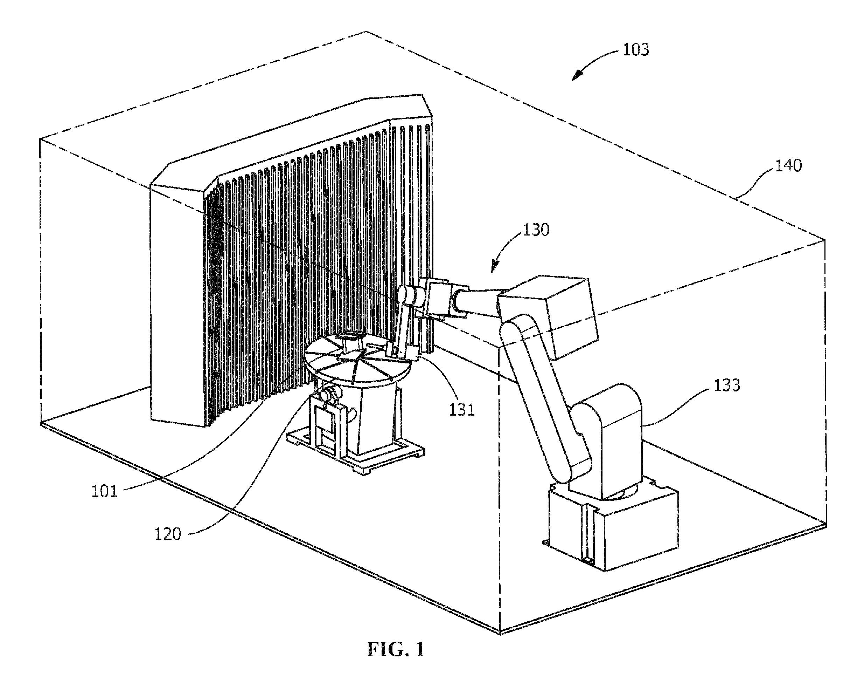

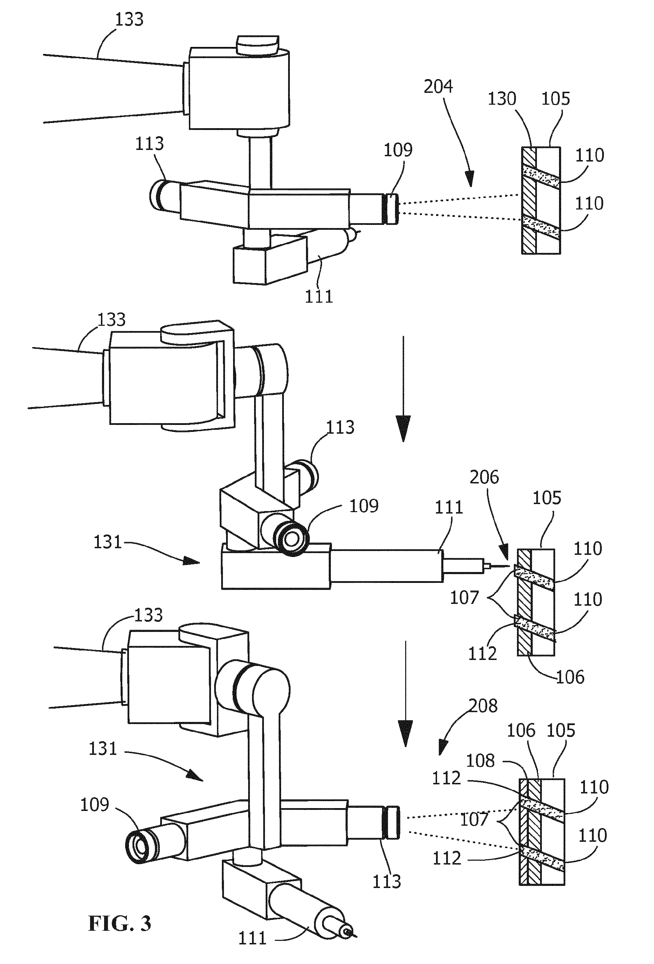

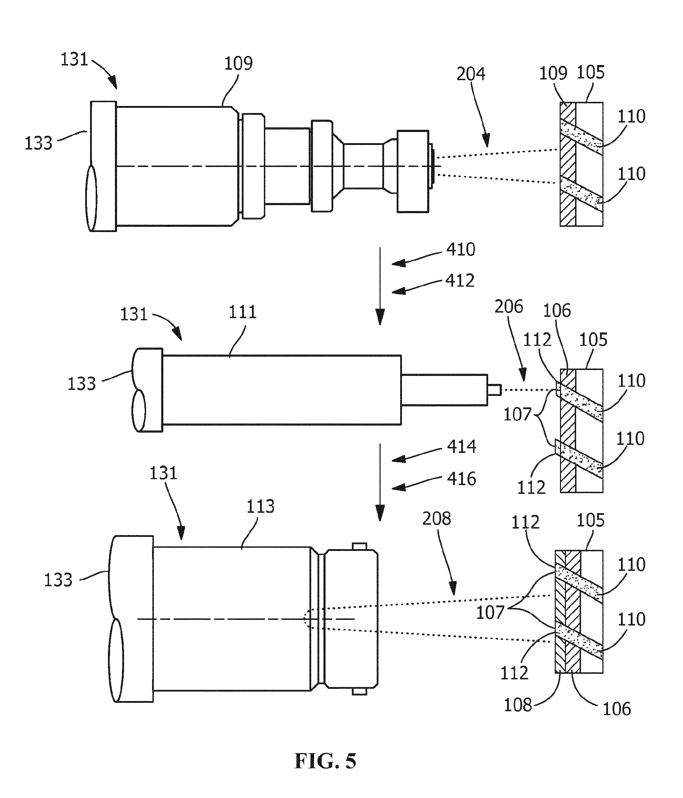

Referring to FIG. 1, an enclosed coating system 103 includes a component support 120 and a coating apparatus 130 positioned within a housing 140. The enclosed coating system 103 includes an enclosure or space having a controlled or controllable atmosphere, or isolation from an exterior environment. The component support 120 includes any article for supporting a component 101, such as, but not limited to, a two-axis part table. In one embodiment, the coating apparatus 130 includes at least one head portion 131 secured to a support member 133. In another embodiment, as illustrated in FIGS. 3 and 5, the at least one head portion 131 includes a first coating head portion 109, a second coating head portion 113, a masking head portion 111, or a combination thereof In a further embodiment, the at least one head portion 131 is detachably secured to the support member 133. The support member 133 includes any suitable member for supporting and/or moving the at least one head portion 131, such as a robot arm. The robot arm is shown as a six-axis robot arm in FIG. 1; however, as will be appreciated by one skilled in the art, the robot arm may include more or less axes to provide varying degrees of articulation, as needed.

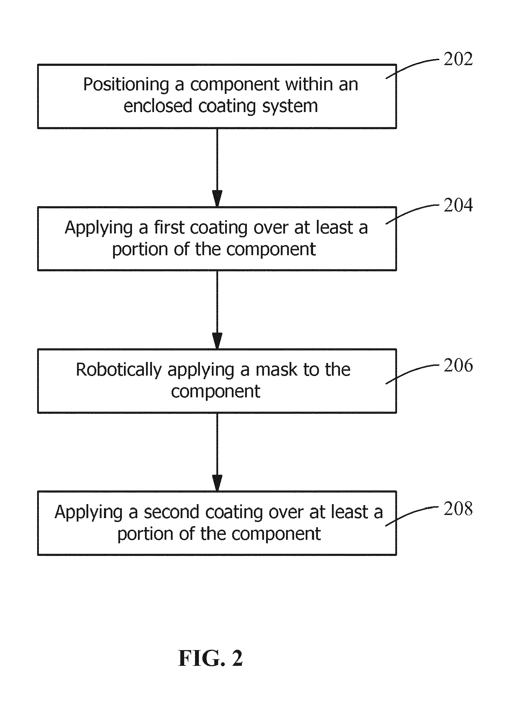

Referring to FIGS. 2-3, in one embodiment, a coating process 100 includes positioning (step 202) the component 101 within the enclosed coating system 103 and applying a first coating 106 (step 204) over at least a portion 105 of the component 101. After applying the first coating 106 (step 204), the coating process 100 includes robotically applying (step 206) a mask 107 to the component 101, then applying a second coating 108 (step 208) over at least the portion 105 of the component 101. In another embodiment, the first coating 106, the mask 107, and/or the second coating 108 are applied with the coating apparatus 130. In another embodiment, the coating process 100 includes repeating the applying (step 206) of the mask 107 and/or applying one or more additional coating layers. In a further embodiment, the coating process 100 is devoid or substantially devoid of additional steps, such as, but not limited to, cooling steps, processing steps, un-fixturing steps, re-fixturing steps, or a combination thereof. The component 101 remains within the enclosed coating system 103 throughout the coating process 100.

The component 101 includes any suitable component for receiving a coating and/or the mask 107 thereon, such as, but not limited to, a blade or bucket, a nozzle, a shroud, a vane, a transition piece, a liner, any other turbine component, or a combination thereof. In one embodiment, the component 101 includes one or more features formed in a surface thereof, the one or more features including, but not limited to, apertures, such as cooling holes; cavities; recesses; or a combination thereof. In another embodiment, a first masking material 110 is deposited within and/or over the one or more features, prior to the applying the first coating 106 (step 204). The first masking material 110 is applied by any suitable technique, such as, but not limited to, manually, with the coating apparatus 130, prior to positioning the component 101 within the enclosed coating system 103, subsequent to positioning the component 101 within the enclosed coating system 103, or a combination thereof. In a further embodiment, the applying (step 206) of the mask 107 includes depositing a second masking material 112 within the one or more features, and/or over the first masking material 110, the second masking material 112 being the same as or different from the first masking material 110. In one example, the first masking material 110 is diminished during the applying of the first coating 106 (step 204), decreasing an amount and/or level of the first masking material 110 with the one or more features. The second masking material 112 is then deposited over the diminished first masking material 110, forming the mask 107 within and/or over the one or more features. In another example, the second masking material 112 is applied over the first masking material 110, the second masking material 112 providing increased masking during the applying of the second coating 108 (step 208).

The first masking material 110 and/or the second masking material 112 include any suitable material for decreasing or eliminating deposition of the first coating 106, the second coating 108, and/or any other coating onto and/or within an area covered by the mask 107. Suitable masking materials include, but are not limited to, radiation-curable materials; adhesives; silicon-based materials; ceramic and/or ceramic-like materials; graphite; metallic materials, such as Co-Cr-Mo; or a combination thereof. The ceramic materials and/or ceramic-like materials include, but are not limited to, aluminum oxide, zirconium oxide, hafnium oxide, yttria-stabilized zirconium oxide; derivatives of aluminum oxide, zirconium oxide, hafnium oxide, yttria-stabilized zirconium oxide; or a combination thereof. In one embodiment, the first masking material 110 and/or the second masking material 112 are selected based upon an application method of the first coating 106 and/or the second coating 108, respectively. In another embodiment, the mask 107 includes a metallic material formed outside the enclosed coating system 103. The applying (step 206) of the mask 107 formed outside the enclosed coating system 103 includes positioning the mask 107 over the component 101.

The applying of the first coating 106 (step 204) and/or the applying of the second coating 108 (step 208) includes any suitable method for applying one or more coating layers over the component 101. Suitable methods include, but are not limited to, high-velocity oxygen fuel (HVOF) spraying, air-plasma spray (APS), high-velocity air fuel (HVAF) spraying, vacuum plasma spray (VPS), electron-beam physical vapor deposition (EBPVD), chemical vapor deposition (CVD), ion plasma deposition (IPD), combustion spraying with powder or rod, cold spray, sol gel, electrophoretic deposition, tape casting, polymer derived ceramic coating, slurry coating, dip-application, vacuum-coating application, curtain-coating application, brush-application, roll-coat application, agglomeration and sintering followed by spray drying, or a combination thereof.

The first coating 106 and the second coating 108 may be applied by the same or different coating methods. In one example, the first coating 106 and the second coating 108 are applied with the first coating head portion 109, the first coating head portion 109 applying the first coating 106 (step 204) and the second coating 108 (step 208) with the HVOF spraying. In another example, the first coating 106 is applied with the first coating head portion 109 and the second coating 108 is applied with a second coating head portion 113, the first coating head portion 109 applying the first coating 106 (step 204) with the HVOF spraying, and the second coating head portion 113 applying the second coating 108 (step 208) with the APS.

The masking head portion 111 secured to the support member 133 provides the robotically applying (step 206) of the mask 107 to the component 101. In one embodiment, the masking head portion 111 includes an application device, a curing device, and/or a location device. The application device includes any suitable device for depositing the masking material over the surface of the component 101 and/or the one or more features formed therein. As illustrated in FIGS. 3 and 5, one suitable application device includes a syringe. Other suitable application devices include, but are not limited to, a printing device, a spray device, or a combination thereof.

The curing device includes any suitable device for curing the mask 107, such as, but not limited to, an ultraviolet curing device, a thermal curing device, or a combination thereof In one embodiment, the enclosed coating system 103 is selectively devoid or substantially devoid of conditions that cure the masking material. For example, the enclosed coating system 103 may be devoid or substantially devoid of heat, ultra-violet (UV) light, infrared (IR) light, other forms of radiation that may result in undesirable curing, or a combination thereof. In another embodiment, the curing device of the masking head portion 111 selectively cures the masking material during and/or after the robotically applying (step 206) the mask 107. The selective curing of the masking material with the curing device provides increased control over a geometry of the mask 107. In a further embodiment, the selective curing of the masking material forms the mask 107 having a geometry complementary to the one or more features.

The location device includes any device for detecting the one or more features formed in the surface of the component 101, such as, for example, a laser; a structured laser scanner; an infrared detector; an electromagnetic probe; a visually-aided mechanism for location detection including, but not limited to, a camera and/or optical based metrology; or a combination thereof. In one embodiment, detecting the one or more features formed in the surface of the component 101 includes individually detecting the features with the location device. In another embodiment, detecting the one or more features includes detecting fewer than all of the features and estimating a position of the rest of the features. For example, detecting the one or more features may include obtaining location data from at least a portion of the component by detecting the features with the location device, then interpolating location data of a remainder of the component from the obtained location data. In a further embodiment, the coating apparatus 130 and/or the location device is provided with nominal positions of the one or more features, the nominal positions being provided from a component model (e.g., an original equipment manufacturer (OEM) model, a computer-aided design (CAD) model), a scan of the component 101, or a combination thereof.

Referring to FIG. 3, in one embodiment, the coating apparatus 130 includes more than one of the head portions 131 secured thereto. In another embodiment, both the first coating head portion 109 and the second coating heat portion 113 are secured to the support member 133. In a further embodiment, as illustrated in FIG. 3, the masking head portion 111 is also secured to the support member 133. Each of the more than one head portions 131 may be detachably or integrally secured to the support member 133. When more than one of the head portions 131 is secured to the support member 133, the coating apparatus 130 is capable of applying one or more coatings and/or masking materials without removing or replacing the head portions 131.

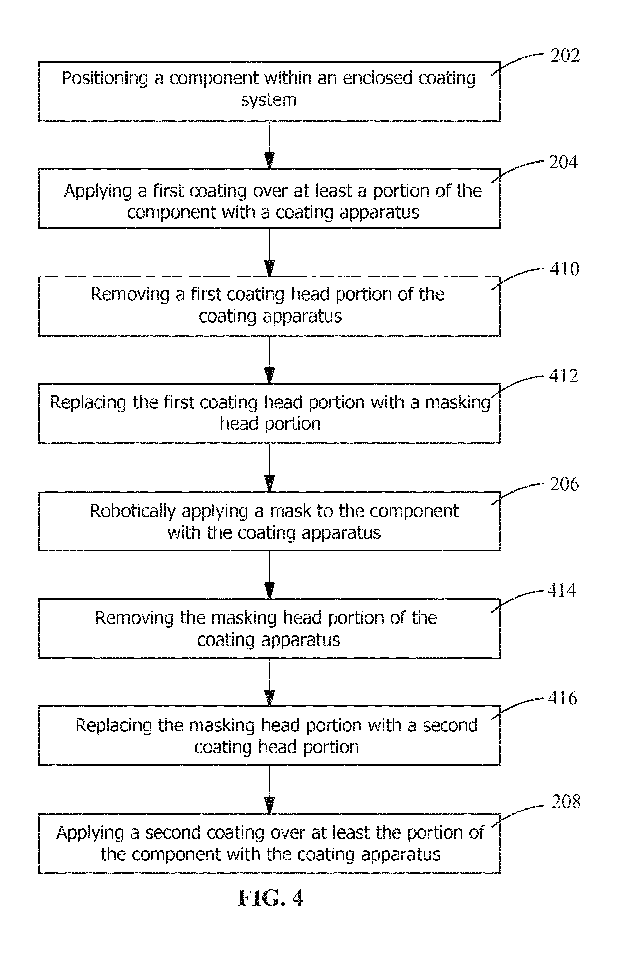

In one embodiment, as illustrated in FIGS. 4-5, one or more of the head portions 131 are interchangeable. In another embodiment, the coating process 100 includes removing (step 410) the first coating head portion 109 of the coating apparatus 130 after the applying of the first coating 106 (step 204), and replacing (step 412) the first coating head portion 109 with the masking head portion 111 prior to the robotically applying (step 206) of the mask 107. In a further embodiment, the coating process 100 includes removing (step 414) the masking head portion 111 of the coating apparatus 130 after the robotically applying (step 206) of the mask 107, and replacing (step 416) the masking head portion 111 with the second coating head portion 113 prior to the applying of the second coating 108 (step 208). Alternatively, the masking head portion 111 is detachably secured to the support member 133, and the first coating head portion 109 is interchangeable with the second coating head portion 113.

The applying of the first coating 106 (step 204) and/or the second coating 108 (step 208) increases a temperature of the component 101 to a temperature above ambient temperature. In one embodiment, after the applying of the first coating 106 (step 204) or the second coating 108 (step 208), the temperature of the component 101 remains above a safe handling temperature for at least about 20 minutes, at least about 30 minutes, at least about 45 minutes, at least about 30 to about 60 minutes, or any combination, sub-combination, range, or sub-range thereof. Safe handling temperatures include, but are not limited to, up to about 75° F, up to about 100° F, up to about 125° F, or any combination, sub-combination, range, or sub-range thereof. In another embodiment, the masking head portion 111 secured to the support member 133 in addition to the first coating head portion 109 and/or the second coating head portion 113 (FIG. 3), or in place of the first coating head portion 109 and/or the second coating head portion 113 (FIG. 5), applies the mask 107 to the component 101 while the temperature of the component 101 is above ambient temperature and/or safe handling temperature.

The applying (step 206) of the mask 107 (see FIGS. 3 and 5) while the temperature of the component 101 is above ambient temperature and/or safe handling temperature decreases or eliminates a cooling time after the applying of the first coating 106 (step 204), decreases an overall cycle time for the process, decreases manual touch time of the component 101, provides the curing of the masking material within the enclosed coating system 103 (e.g., in an environment that is selectively devoid or substantially devoid of conditions that cure the masking material), or a combination thereof. Additionally, the applying (step 206) of the mask 107 within the enclosed coating system 103 decreases or eliminates an un-fixturing and re-fixturing of the component 101 during the coating process 100, which further decreases or eliminates the cooling time after the applying of the first coating 106 (step 204), the overall cycle time, manual touch time of the component 101; provides the curing of the masking material within the enclosed coating system 103; or a combination thereof. In one example, the coating process 100 including the applying (step 206) of the mask 107 while the temperature of the component 101 is above ambient temperature decreases or eliminates a traditional cool down time of up to one hour and a manual masking time of up to three hours. In another example, the coating process 100 including the applying (step 206) of the mask 107 while the temperature of the component 101 is above ambient temperature is completed in less than one hour. Although completing the coating process 100 in less than one hour is provided as an example, one skilled in the art will appreciate that the coating process 100 is not so limited, and that component and/or process specifics will dictate actual cycle time.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the preferred mode contemplated for carrying out this invention, but that the invention will include all embodiments falling within the scope of the appended claims.

Various aspects and embodiments of the present invention are defined by the following numbered clauses:
1. A coating process (100), comprising:
   positioning a component (101) within an enclosed coating system (103), the enclosed coating system (103) including a coating apparatus (130);
   applying a first coating (106) over at least a portion (105) of the component (101); then
   robotically applying a mask (107) to the component (101); then
   applying a second coating (108) over at least the portion (105) the component (101);
   wherein the component (101) remains within the enclosed coating system (103) throughout the coating process (100).
2. The coating process (100) of clause 1, wherein the applying of the first coating is selected from the group consisting of high-velocity oxygen fuel spraying, air-plasma spraying, high-velocity air fuel spraying, vacuum plasma spraying, electron-beam physical vapor deposition, chemical vapor deposition, ion plasma deposition, combustion spraying with powder or rod, cold spraying, sol gel, electrophoretic deposition, polymer derived ceramic coating, vacuum-coating application, curtain-coating application, brush-application, roll-coat application, agglomeration and sintering followed by spray drying, and combinations thereof.
3. The coating process (100) of any preceding clause, wherein the applying of the second coating is selected from the group consisting of high-velocity oxygen fuel spraying, air-plasma spraying, high-velocity air fuel spraying, vacuum plasma spraying, electron-beam physical vapor deposition, chemical vapor deposition, ion plasma deposition, combustion spraying with powder or rod, cold spraying, sol gel, electrophoretic deposition, polymer derived ceramic coating, vacuum-coating application,
   curtain-coating application, brush-application, roll-coat application, agglomeration and sintering followed by spray drying, and combinations thereof.
4. The coating process of any preceding clause, wherein the applying of the first coating comprises high-velocity oxygen fuel spraying and the applying of the second coating comprises air-plasma spraying.
5. The coating process (100) of any preceding clause, further comprising removing a first coating head portion (109) of the coating apparatus (130) after the applying of the first coating (106) and replacing the first coating head portion (109) with a masking head portion (111) prior to the robotically applying the mask (107).
6. The coating process (100) of any preceding clause, wherein the masking head portion (111) includes a device selected from the group consisting of an application device, a curing device, and combinations thereof.
7. The coating process (100) of any preceding clause, wherein the application device is selected from the group consisting of a syringe, a printing device, a spray device, and combinations thereof.
8. The coating process (100) of any preceding clause, wherein the curing device is selected from the group consisting of an ultraviolet curing device, a thermal curing device, and combinations thereof.
9. The coating process (100) of any preceding clause, wherein the masking head portion (111) includes a location device selected from the group consisting of a laser, a structured laser scanner, an infrared detector, an electromagnetic probe, a visually-aided mechanism for location detection, and combinations thereof.
10. The coating process (100) of any preceding clause, wherein the masking head portion (111) includes a visually-aided mechanism for location detection.
11. The coating process (100) of any preceding clause, further comprising applying at least one additional coating layer over at least the portion (105) of the component (101).
12. The coating process (100) of any preceding clause, wherein the mask (107) includes a material selected from the group consisting of a radiation-curable material, an adhesive, a silicon-based material, a ceramic material, a ceramic-like material, and combinations thereof.
13. The coating process (100) of any preceding clause, wherein the mask (107) includes a material selected from the group consisting of aluminum oxide, hafnium oxide, yttria-stabilized zirconium oxide, and combinations thereof.
14. The coating process (100) of any preceding clause, wherein the mask (107) includes metallic material.
15. The coating process (100) of any preceding clause, wherein the mask (107) is formed outside the enclosed coating system (103), and the robotically applying the mask (107) includes positioning the mask (107) over the component (101).
16. The process (101) of any preceding clause, further comprising removing a masking head portion (111) of the coating apparatus (130) after the robotically applying of the mask (107) and replacing the masking head portion (111) with a second coating head portion (113) prior to the applying of the second coating (108).
17. The coating process (100) of any preceding clause, wherein the component (101) is at a temperature above ambient temperature during at least a portion of the applying of the mask (107).
18. The process of any preceding clause, wherein the component (101) is at a temperature above a safe handling temperature during at least a portion of the applying of the mask (107).
19. A coating process (100), comprising:
   positioning a component (101) within an enclosed coating system (103);
   applying a first coating (106) over at least a portion (105) of the component (101) with a coating apparatus (130); then
   removing a first coating head portion (109) of the coating apparatus (130) and replacing the first coating head portion (109) with a masking head portion (111); then
   robotically applying a mask (107) to the component (101) with the coating apparatus (130); then
   removing the masking head portion (111) of the coating apparatus (130) and replacing the masking head portion (111) with a second coating head portion (113); and then
   applying a second coating (108) over at least a portion of the component (101) with the coating apparatus (130);
   wherein the component (101) remains within the enclosed coating system (103) throughout the coating process (100).
20. A coating process (100), consisting of:
   positioning a component (101) within an enclosed coating system (103);
   high-velocity oxygen fuel coating at least a portion (105) of the component (101) with a coating apparatus (130); then
   removing a coating head portion (109) of the coating apparatus (130) and replacing the coating head portion (109) with a masking head portion (111); then
   robotically applying a mask (107) to the component (101) with the coating apparatus (130); then
   removing the masking head portion (111) of the coating apparatus (130) and replacing the masking head portion (111) with an air-plasma head portion (113); and then
   air-plasma spraying the component (101) with the coating apparatus (130).

## Claims

1. A coating process (100), comprising:
positioning a component (101) within an enclosed coating system (103), the enclosed coating system (103) including a coating apparatus (130);
applying a first coating (106) over at least a portion (105) of the component (101); then
robotically applying a mask (107) to the component (101); then
applying a second coating (108) over at least the portion (105) the component (101);
wherein the component (101) remains within the enclosed coating system (103) throughout the coating process (100).

2. The coating process (100) of claim 1, wherein the applying of the first coating is selected from the group consisting of high-velocity oxygen fuel spraying, air-plasma spraying, high-velocity air fuel spraying, vacuum plasma spraying, electron-beam physical vapor deposition, chemical vapor deposition, ion plasma deposition, combustion spraying with powder or rod, cold spraying, sol gel, electrophoretic deposition, polymer derived ceramic coating, vacuum-coating application, curtain-coating application, brush-application, roll-coat application, agglomeration and sintering followed by spray drying, and combinations thereof.

3. The coating process (100) of any preceding claim, wherein the applying of the second coating is selected from the group consisting of high-velocity oxygen fuel spraying, air-plasma spraying, high-velocity air fuel spraying, vacuum plasma spraying, electron-beam physical vapor deposition, chemical vapor deposition, ion plasma deposition, combustion spraying with powder or rod, cold spraying, sol gel, electrophoretic deposition, polymer derived ceramic coating, vacuum-coating application, curtain-coating application, brush-application, roll-coat application, agglomeration and sintering followed by spray drying, and combinations thereof.

4. The coating process (100) of any preceding claim, wherein the applying of the first coating comprises high-velocity oxygen fuel spraying and the applying of the second coating comprises air-plasma spraying.

5. The coating process (100) of any preceding claim, further comprising removing a first coating head portion (109) of the coating apparatus (130) after the applying of the first coating (106) and replacing the first coating head portion (109) with a masking head portion (111) prior to the robotically applying the mask (107).

6. The coating process (100) of claim 5, wherein the masking head portion (111) includes a device selected from the group consisting of an application device, a curing device, and combinations thereof.

7. The coating process (100) of claim 6, wherein the application device is selected from the group consisting of a syringe, a printing device, a spray device, and combinations thereof.

8. The coating process (100) of claim 6 or claim 7, wherein the curing device is selected from the group consisting of an ultraviolet curing device, a thermal curing device, and combinations thereof.

9. The coating process (100) of any of claims 5 to 8, wherein the masking head portion (111) includes a location device selected from the group consisting of a laser, a structured laser scanner, an infrared detector, an electromagnetic probe, a visually-aided mechanism for location detection, and combinations thereof.

10. The coating process (100) of any of claims 5 to 9, wherein the masking head portion (111) includes a visually-aided mechanism for location detection.

11. The coating process (100) of any preceding claim, further comprising applying at least one additional coating layer over at least the portion (105) of the component (101).

12. The coating process (100) of any preceding claim, wherein the mask (107) includes a material selected from the group consisting of a radiation-curable material, an adhesive, a silicon-based material, a ceramic material, a ceramic-like material, and combinations thereof.

13. The coating process (100) of any preceding claim, wherein the mask (107) includes a material selected from the group consisting of aluminum oxide, hafnium oxide, yttria-stabilized zirconium oxide, and combinations thereof.

14. The coating process (100) of any preceding claim, wherein the mask (107) includes metallic material.

15. A coating process (100), comprising:
positioning a component (101) within an enclosed coating system (103);
applying a first coating (106) over at least a portion (105) of the component (101) with a coating apparatus (130); then
removing a first coating head portion (109) of the coating apparatus (130) and replacing the first coating head portion (109) with a masking head portion (111); then
robotically applying a mask (107) to the component (101) with the coating apparatus (130); then
removing the masking head portion (111) of the coating apparatus (130) and replacing the masking head portion (111) with a second coating head portion (113); and then
applying a second coating (108) over at least a portion of the component (101) with the coating apparatus (130);
wherein the component (101) remains within the enclosed coating system (103) throughout the coating process (100).
